# EUROPÄISCHE PATENTANMELDUNG

(11) **EP 4 335 564 A1**
(43) Veröffentlichungstag der Anmeldung: **13.03.2024**
(21) Anmeldenummer: 23189790.1
(22) Anmeldetag: 04.08.2023
(51) Int. Cl.: B21J 7/14, B21J 9/20

(54) **VERFAHREN ZUR AUTOMATISCHEN STICHPLANBERECHNUNG BEIM RADIALSCHMIEDEN**

(30) Priorität: 15.08.2022 DE 102022208461
(71) Anmelder: SMS Group GmbH, 40237 Düsseldorf (DE)
(72) Erfinder: Knauf, Frederik, 52385 Nideggen-Abenden (DE); Wolfgarten, Martin, 52074 Aachen (DE)
(74) Vertreter: Klüppel, Walter

(57) **Zusammenfassung**

Die Erfindung betrifft ein Verfahren zur automatischen Stichplanberechnung beim Radialschmieden von Langprodukten aus metallischen Werkstücken, insbesondere aus Stahl, in einer Radialschmiedemaschine mit wenigstens vier über den Umfang des Werkstücks angeordneten Schmiedewerkzeugen, die eingerichtet und angepasst sind, gleichzeitig die Schmiedeoperation zumindest über eine Teillänge des Werkstücks und/oder Langprodukts auszuführen, wobei Startparameter für den Radialschmiedevorgang in ein Stichplanberechnungsprogramm eingegeben und Zielparameter für den Radialschmiedevorgang festgelegt werden und das Stichplanberechnungsprogramm auf Grundlage dieser Start- und Zielparameter einen Stichplan oder eine Schmiedeabfolge berechnet, wobei das Stichplanberechnungs-programm die Temperaturentwicklung sowie die Temperaturverteilung über den Querschnitt des Langprodukts sowie die Formänderung beim Radialschmieden berücksichtigt. Des Weiteren betrifft die Erfindung eine Steuerungs- und/oder Regeleinheit sowie eine Radialschmiedemaschine zum Ausführen des erfindungsgemäßen Verfahrens.

## Beschreibung

### 1. Gebiet der Erfindung

Die Erfindung betrifft ein Verfahren zur automatischen Stichplanberechnung beim Radialschmieden von Langprodukten aus metallischen Werkstücken, insbesondere aus Stahl, in einer Radialschmiedemaschine mit wenigstens 4 über den Umfang des Werkstücks angeordneten Schmiedewerkzeugen, die eingerichtet und angepasst sind, gleichzeitig die Schmiedeoperation zumindest über eine Teillänge des Werkstücks und/oder Langprodukts auszuführen.

### 2. Stand der Technik

Die automatische Stichplanberechnung ist bei Freiformschmiedepressen und Radialschmiedemaschinen dem Fachmann hinlänglich bekannt. Derzeit verfügbare Software, die die geometrischen Größen, so etwa Durchmesser und Länge des umzuformenden Werkstücks sowie eine Durchschnittstemperatur des Werkstücks über den Schmiedevorgang hindurch berechnet, werden beispielsweise unter den Markennamen ForgeBase^{®} und COMFORGEO am Markt verkauft. Diese Software ermöglicht, dass der Anlagenbetreiber eine Ausgangsgeometrie sowie eine Endgeometrie in einer Eingabemaske eingibt und darauf aufbauend von der Software nach definierten Parametern der Stichplan gerechnet wird. D. h., die Software berechnet, in wie vielen Überschmiedungen die Endgeometrie erreicht wird und welche Querschnittsreduktion pro Überschmiedung realisiert wird. Aus den Einzelumformungen ergibt sich dann eine der Reckgrad. Zudem wird die Temperatur und erforderliche Presskraft nach einer Überschmiedung abgeschätzt, wobei die Software lediglich in der Lage ist, einfache Geometrien wie etwa das Schmieden von Stabstahl zu berechnen.

Es besteht somit der Wunsch, Stichplanberechnungsprogramme weiterzuentwickeln und dann auch für komplexe Geometrien von Langprodukten wie etwa abgesetzten Wellen wie beispielsweise Eisenbahnachsen zur Verfügung zu stellen. Darüber hinaus ist es eine Aufgabe der Erfindung, die aus bisherigen Prozessen bekannten Schmiedeergebnisse weiter zu optimieren und die berücksichtigten Parameter beim Schmieden zu erweitern.

### 3. Aufgabe der Erfindung

Diese Aufgabe wird im erfindungsgemäßen Sinne mit einem Verfahren, umfassend die Merkmale des Anspruchs 1, einer Steuerungs- und/oder Regelungseinheit einer Radialschmiedemaschine, umfassend die Merkmale des Anspruchs 11 sowie mit einer Radialschmiedemaschine, umfassend die Merkmale des Anspruchs 12, gelöst. Vorteilhafte Ausgestaltungen der Erfindung sind insbesondere in den abhängigen Ansprüchen dargelegt.

### 4. Zusammenfassung der Erfindung

Erfindungsgemäß wird ein Verfahren zur automatischen Stichplanberechnung beim Radialschmieden von Langprodukten aus metallischen Werkstücken, insbesondere aus Stahl, in einer Radialschmiedemaschine mit wenigstens 4 über den Umfang des Werkstücks angeordneten Schmiedewerkzeugen zur Verfügung gestellt, die eingerichtet und angepasst sind, gleichzeitig die Schmiedeoperation zumindest über eine Teillänge des Werkstücks und/oder Langprodukts auszuführen. Hierbei werden Startparameter für den Radialschmiedevorgang in ein Stichplanberechnungsprogramm eingegeben und Zielparameter für den Radialschmiedevorgang festgelegt. Das Stichplanberechnungsprogramm berechnet auf Grundlage dieser Start- und Zielparameter einen Stichplan oder eine Schmiedeabfolge, wobei das Stichplanberechnungsprogramm die Temperaturentwicklung sowie die Temperaturverteilung über den Querschnitt des Langprodukts sowie die Formänderung beim Radialschmieden berücksichtigt.

Hierdurch wird durch die Berechnung der Temperaturverteilung sowie der Formänderungsverteilung über den Bauteilquerschnitt das Schmiedeergebnis insgesamt optimiert. Die beschriebene Lösung ist grundsätzlich über eine Kombinatorik aus Stichplanberechnungssoftware sowie Finite Elemente Methode möglich, wobei die Stichplanberechnungssoftware einen Stichplan ermittelt, welcher dann mittels Finiter Elemente Methode abgebildet wird. Als Ergebnis der Finite Elemente Methode kann die Temperaturverteilung sowie Formänderungsverteilung über den Querschnitt des umzuformenden Produkts detektiert werden. Da jedoch die Berechnung der Temperaturverteilung sowie Formänderungsverteilung mittels Finiter Elemente Methode langwierig, kostenintensiv ist und technologisch geschultes Personal erfordert, um die FEM einzusetzen und die Ergebnisse auszuwerten, erfolgt vorzugsweise die Berechnung der Temperaturverteilung der Formänderungsverteilung über den Bauteilquerschnitt mittels des Stichplanberechnungsprogramms. Mit einer solchen Berechnung kann im Vorfeld einer Schmiedung auf sehr einfache und schnelle Art und Weise eine detaillierte Aussage über die Qualität des Schmiedestücks in Abhängigkeit vom berechneten Stichplan getroffen werden, wodurch sich insbesondere auch die Möglichkeit ergibt, komplexere Geometrien als einfache Stabstähle umzuformen. Insbesondere eröffnet die Erfindung die Möglichkeit, abgesetzte Wellen wie beispielsweise Eisenbahnachsen, sicher und zuverlässig zu schmieden.

Insbesondere bei von Stabstählen abweichenden Geometrien ist der Materialfluss beim Schmieden gerade im Bereich von zu schmiedenden Absätzen in einer abgesetzten Welle von besonderer Bedeutung für die örtliche einzubringende Umformung , insbesondre Querschnittsreduktion, und somit Temperaturverteilung und Formänderungsverteilung über den Bauteilquerschnitt. Das erfindungsgemäße Verfahren berücksichtigt diese Parameter bei der Stichplanberechnung und bietet vorzugsweise ein auf die jeweilig gewünschte Endgeometrie optimiertes Schmiedeergebnis, das besonders bevorzugt automatisch und reproduzierbar erreichbar ist.

Die Stichplanberechnung erfolgt dabei erfindungsgemäß stets unter Berücksichtigung mehrerer Einflussparameter wie etwa der Werkzeuggeometrie, der maximal möglichen Presskraft, des Vorschubs des Werkstücks, der Werkstückeigenschaften wie etwa der Fließkurve des Werkstoffs usw. Bei der Stichplanberechnung werden all diese Parameter derart berücksichtigt, dass alle Grenzen wie etwa die maximale Presskraft eingehalten werden. Zudem wird bei der Stichplanberechnung ein minimaler Materialausschuss bzw. Verschnitt, d.h. Material, welches nicht für die finale Eisenbahnachse verwendet werden kann, angestrebt. Als Verschnitt kann bei einer Eisenbahnachse beispielsweise die Enden bezeichnet werden, die mittels Trenneinrichtung entsprechend abgelängt und abgetrennt werden.

Bei innen abgesetzten Wellen - einer Hantelform, bei welcher zwei dickere Absätze außen in einen dünneren Mittelteil übergehen - wiederum besteht die wesentliche Herausforderung darin, dass die Toleranzen zwischen beiden Schultern, also dem innen abgesetzten Bereich, möglichst genau eingehalten werden. Die Berechnung erfolgt u. a. unter Berücksichtigung des anteiligen Materialflusses im Bereich der Werkzeugkontaktfläche in positiver sowie negativer Längsrichtung. Hierbei ist insbesondere zu beachten, dass die Werkzeugkontaktfläche einerseits durch einen parallel zur Längsrichtung des Werkstücks verlaufenden Bereich, andererseits durch einen schräg verlaufenden Bereich, somit unter einem Winkel zur Längsrichtung des Werkstücks, charakterisiert ist. Somit ergibt sich bei diesen Schmiedeoperationen im Vergleich zum konventionellen Radialschmieden eine Berechnung, welche deutlich mehr Einflussfaktoren berücksichtigen muss als dies beim Radialschmieden von Stabstahl und ähnlich einfachen Geometrien der Fall ist.

Schließlich wird in einer bevorzugten Ausführungsform der Erfindung bei der Stichplanberechnung immer berücksichtigt, das durch Umformarbeit eingebrachte Umformwärme zur Erwärmung des Werkstücks führt, was bei unterschiedlichen Werkstoffen insbesondere dann berücksichtigt werden muss, wenn Schwellenwerte für Gefügeumformungen oder dergleichen überschritten werden mögen. Der Prozessablauf sollte daher bevorzugt auf verschiedene Werkstoffe angepasst werden.

In einer bevorzugten Ausführungsform des erfindungsgemäßen Verfahrens berücksichtigt das Stichplanberechnungsprogramm eine optimierte Formänderungsverteilung, besonders bevorzugt innerhalb eines vorab festgelegten Temperaturbereichs. Hierdurch wird ein Verfahren zur Verfügung gestellt, das insbesondere beim Radialschmieden komplexer Werkstückgeometrien zu Langprodukten, vor allem bei abgesetzten Wellen, die örtlich unterschiedliche Formänderungsverteilung und damit verbundene Umformarbeit berücksichtigt. Idealerweise wird ein Langprodukt erzielt, das über seine gesamte Länge und seinen gesamten Querschnitt durchgeschmiedet und gleichzeitig keinen Bereich aufweist, der aufgrund erhöhter Umformarbeit vorab festgelegte und werkstoffabhängige Schwellenwerte für die Temperatur überschritten hat. Erhalten wird somit ein Langprodukt auch mit komplexer Geometrie, dass eine über seine Länge und seinen Querschnitt optimierte Gefügestruktur und damit verbunden optimierte Werkstückeigenschaften aufweist.

In diesem Zusammenhang wird insbesondere bevorzugt, wenn das Stichplanberechnungsprogramm die optimierte Formänderungsverteilung und die Temperaturentwicklung sowie Temperaturverteilung nach jedem Stich berücksichtigt. Hierdurch wird ein Verfahren zur Verfügung gestellt, das auch Zwischenschritte bei der Umformung des Werkstücks zum Langprodukt berücksichtigt und sicherstellt, dass zu keinem Zeitpunkt des Radialschmiedevorgangs vorab festgelegte Schwellenwerte hinsichtlich der Anlagen- und Verfahrensparameter überschritten werden.

Bevorzugt wird in einer weiteren Ausgestaltungsform der Erfindung, wenn die Startparameter, die in ein Stichplanberechnungsprogramm eingegeben werden, die Ausgangsgeometrie des Werkstücks, dessen Abmessungen, dessen Starttemperatur, insbesondere die Ofentemperatur, bei der das Werkstück vor Beginn des Radialschmiedevorgangs entnommen wurde, sowie den Werkstoff des Werkstücks, umfasst.

Bevorzugt wird überdies, wenn die Zielparameter, die für den Radialschmiedevorgang festgelegt und in das Stichplanberechnungsprogramm eingegeben werden, die Zielgeometrie des Langprodukts, dessen finale Abmessungen eine homogene Formänderung umfassen. Die Formänderungsverteilung über den Querschnitt des Langprodukts und/oder die Temperaturverteilung über den Querschnitt des Langprodukts sind Resultierende einer mit diesen Zielparametern ausgeführten Verfahrens. Hierdurch wird ein Verfahren zur Verfügung gestellt, das hinsichtlich des Radialschmiedevorgangs alle für die optimale Verwendung des Stichplanberechnungsprogramms erforderlichen Parameter kennt und bei der Berechnung des Stichplans berücksichtigt.

In diesem Zusammenhang wird insbesondere bevorzugt, wenn anhand der Zielparameter der Temperaturentwicklung und Temperaturverteilung eine optimierte Formänderungsverteilung, insbesondere über die einzelnen Schritte des Schmiedeprozesses hinweg, durch das Stichplanberechnungsprogramm berechnet wird, oder dass anhand des Zielparameters einer optimalen Formänderungsverteilung die Temperaturentwicklung und Temperaturverteilung, insbesondere über die einzelnen Schritte des Schmiedeprozesses, berechnet werden. Die Erfindung nutzt somit entweder die Temperaturentwicklung und Temperaturverteilung zur Optimierung der Formänderungsverteilung, oder aber die Formänderungsverteilung zur Optimierung der Temperaturentwicklung und Temperaturverteilung insbesondere über die einzelnen Schritte des Schmiedeprozesses und optimiert somit das Stichplanberechnungsprogramm und schließlich das Schmiedeergebnis selbst.

Besonders bevorzugt wird zudem, wenn anhand der Zielparameter Temperaturentwicklung und Temperaturverteilung ein optimiertes Gefüge oder eine optimierte Gefügeverteilung durch das Stichplanberechnungsprogramm berechnet wird. Alternativ hierzu kann in einer ebenso bevorzugten Ausführungsform anhand des Gefüges als Zielparameter die Temperaturentwicklung und Temperaturverteilung berechnet werden. In jedem Fall wird ein Langprodukt durch Radialschmieden erzielt, das vorzugsweise in jedem Bauteilquerschnitt ein vorab festgelegtes Gefüge oder eine vorab festgelegte Gefügeverteilung aufweist.

In diesem Zusammenhang wird auch bevorzugt, wenn das Stichplanberechnungsprogramm die durch die Umformarbeit während des Radialschmiedens in das Werkstück eingebrachte Umformwärme berücksichtigt. Dem Fachmann ist bekannt, dass durch die Querschnittsreduktion wesentliche Energie in das Werkstück eingebracht wird und diese Energie sich nicht nur in der dadurch eingebrachten Formänderung zeigt, sondern auch in einer deutlich messbaren Erhöhung der Werkstücktemperatur. Diese Erhöhung der Werkstücktemperatur ist bei unterschiedlichen Umformarbeiten, die auf das Werkstück einwirken, lokal oft deutlich unterschiedlich und weist somit auch einen lokal deutlichen Einfluss auf das bestehende oder sich bildende Gefüge auf. Die Berücksichtigung der in das Werkstück eingebrachten Umformwärme unterstützt somit das erfindungsgemäße Verfahren bei der Erreichung eines optimalen Radialschmiedeergebnisses.

Besonders bevorzugt wird zudem, wenn das Verfahren online mit einer Pressensteuerungseinheit verbunden ist und während des Radialschmiedevorgangs anhand von Messwerten und/oder berechneten Werten optimierte Steuerungsbefehle ausgeben kann. Eine so gestaltete Regelung des erfindungsgemäßen Verfahrens nutzt entweder geeignete Messergebnisse, insbesondere gemessene Oberflächentemperaturen, oder aber dort, wo keine Messungen vorgenommen werden können oder nur erschwert möglich sind, berechnete Werte zum regelmäßigen und idealerweise ständigen online-Regeln des Radialschmiedevorgangs. Hierdurch wird das Ziel eines optimierten Verfahrens zur automatischen Stichplanberechnung beim Radialschmieden von Langprodukten aus metallischen Werkstücken besonders vorteilhaft und mit leicht beherrschbaren Mitteln unterstützt.

Gemäß einem weiteren Aspekt der Erfindung wird eine Steuerungs- und/oder Regelungseinheit einer Radialschmiedemaschine zur Verfügung gestellt, wobei die Steuerungs- oder Regelungseinheit ein Stichplanberechnungsprogramm zur Ausführung des Verfahrens gemäß dem ersten Aspekt der Erfindung beinhaltet oder zumindest mit diesem zusammenarbeitet.

Gemäß einem dritten Aspekt der Erfindung wird eine Radialschmiedemaschine zum Radialschmieden von Langprodukten aus metallischen Werkstücken, insbesondere aus Stahl, mit wenigstens 4 über den Umfang des Werkstücks angeordneten Schmiedewerkzeugen zur Verfügung gestellt, welche eingerichtet und angepasst sind, gleichzeitig die Schmiedeoperation zumindest über eine Teillänge des Werkstücks und/oder Langprodukts auszuführen, wobei die Radialschmiedemaschine gemäß dem dritten Aspekt der Erfindung mit einer Steuerungs- und/oder Regelungseinheit gemäß dem zweiten Aspekt der Erfindung verbunden ist oder zumindest mit dieser zusammenarbeitet. Hierdurch wird eine Radialschmiedemaschine zur Verfügung gestellt, die in der Lage ist, sämtliche mit dem erfindungsgemäßen Verfahren gemäß dem ersten Aspekt verbundenen technischen Effekte sicher und reproduzierbar für den Anlagenbetreiber zur Verfügung zu stellen.

Wie eingangs bereits beschrieben, ist eine solche Radialschmiedemaschine insbesondere bevorzugt dazu angepasst und ausgelegt, das Radialschmieden von abgesetzten Wellen wie beispielsweise Eisenbahnachsen, auszuführen.

### 5. Kurze Beschreibung der Figuren

Die Erfindung wird nachfolgend unter Bezug auf 5 Figuren näher erläutert, die eine Abfolge von möglichen Umformschritten zur Erzielung einer abgesetzten Welle aus einem zylindrischen Ausgangsmaterial zeigen.

In den Figuren zeigen
- Figur 1: einen Querschnitt durch ein Ausgangsmaterial zur Durchführung des erfindungsgemäßen Verfahrens,
- Figur 2: ein Zwischenprodukt nach einem ersten Stich,
- Figur 3: ein Zwischenprodukt nach einem zweiten Stich,
- Figur 4: ein Zwischenprodukt nach einem vierten Stich, und
- Figur 5: das Endprodukt nach einem fünften Stich.

### 6. Kurze Beschreibung der Figuren

Auf die Wirkweise einer Radialschmiedemaschine und verschiedener Schmiedewerkzeug-Geometrien wird im Folgenden nicht näher eingegangen werden. Dem Fachmann sind die Zusammenhänge von Pressengeometrien, maximaler Presskraft, Manipulatorvorschüben, Bissverhältnis und ähnlichem hinlänglich bekannt. Im Folgenden wird ein beispielhafter Weg dargestellt, wie aus einem stranggegossenen zylindrischen Vormaterial 2 in einer Mehrzahl von Stichfolgen ein Endprodukt in Form einer Eisenbahnachse 1 radial geschmiedet wird.

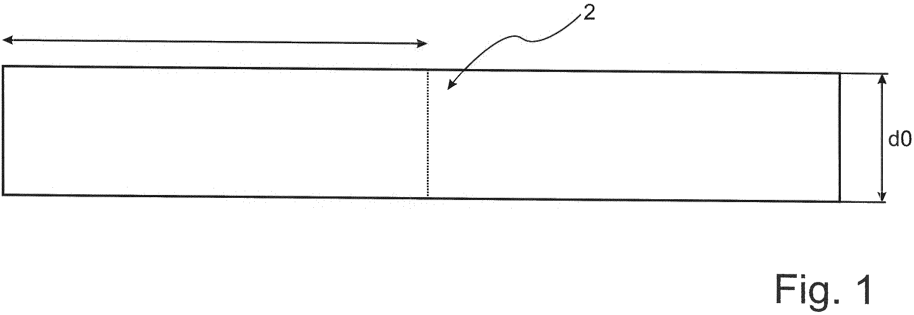

Figur 1 zeigt ein Ausgangsmaterial für ein erfindungsgemäßes Verfahren, hier einen zylindrischen Stranggussblock aus Kohlenstoffstahl mit einem Durchmesser d0.

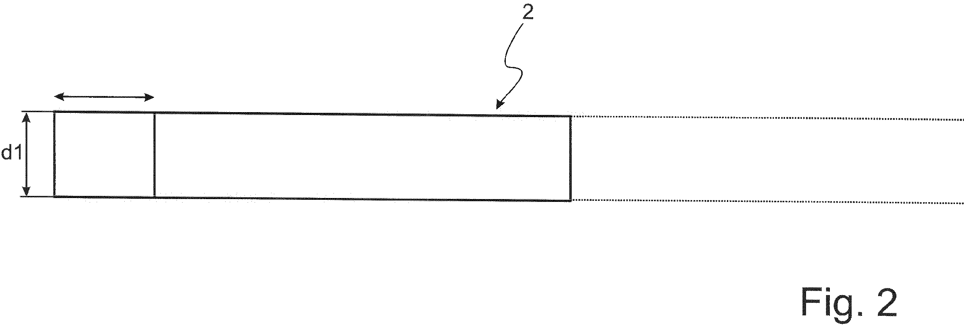

Figur 2 zeigt das Werkstück nach einem ersten Stich, somit einer Abfolge von Umformoperationen der (nicht dargestellten) Radialschmiedemaschine an dem Ausgangsmaterial 2 aus Figur 1, wobei der Vorblock 2 über seine gesamte Länge auf einen Durchmesser d1 verringert wurde und somit die Länge des Vorblocks 2 sich entsprechend vergrößert hat.

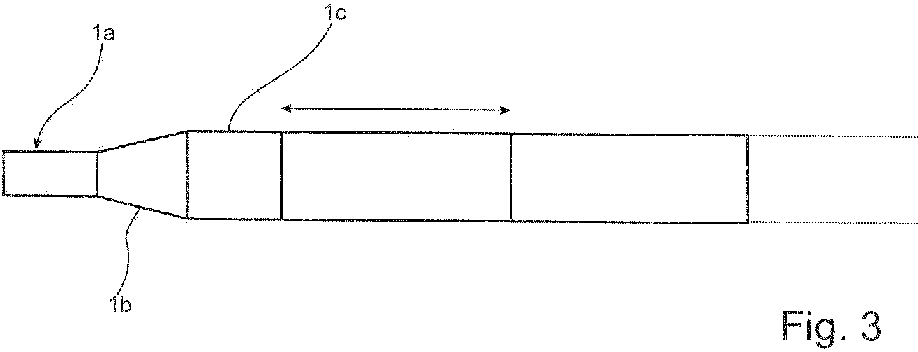

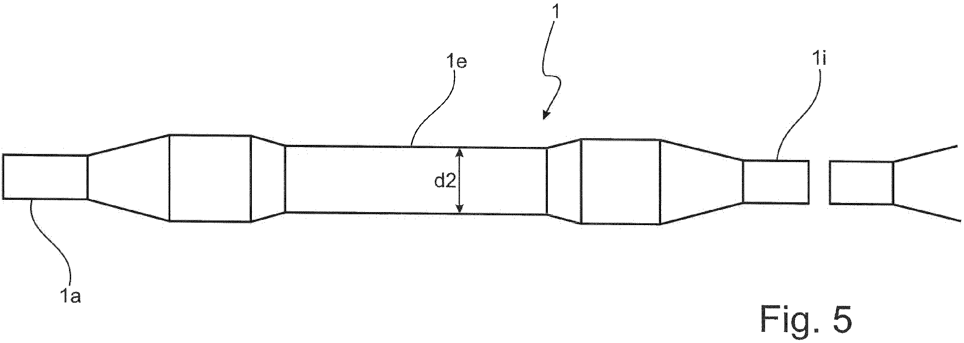

Figur 3 zeigt eine weitere Zwischenstufe aus dem Vorblock 2 aus Figur 1 zu einer vollständig umgeformten Eisenbahnachse 1, wie sie in Figur 5 zu sehen ist. Der abgereckte Vorblock 2 wurde von links nach rechts gesehen in einem ersten Zapfenbereich 1a bereits auf seine Endgeometrie umgeformt, ebenso im Übergangsbereich 1b und dem zylindrischen Bereich 1c.

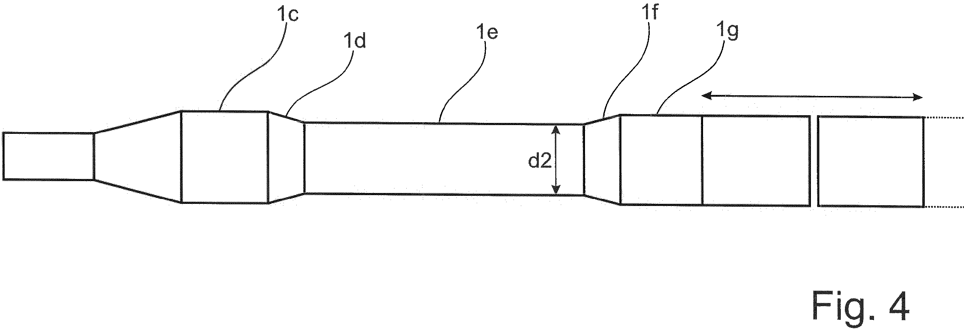

Figur 4 zeigt einen weiteren Zwischenschritt des Radialschmiedens vom Vorblock 2 zum fertig geschmiedeten Schmiedestück 1, mit der Umformung des zentralen Eisenbahnachsenabschnitts 1e auf seinen Enddurchmesser d2, links und rechts daran anschließend Bereiche 1d und 1f, die den Übergang vom zentralen Bereich 1e zu den Bereichen 1c und 1g bilden.
Figur 5 schließlich zeigt eine mittels eines erfindungsgemäßen Verfahrens radial geschmiedete Eisenbahnachse 1 mit ihrer spiegelsymmetrischen Endgeometrie, bei der die Endbereiche 1a und 1i einen Durchmesser d3 und der zentrale Bereich 1e den Durchmesser d2 aufweist. Der gesamte Umformprozess vom Ausgangsmaterial gemäß Figur 1 zum schlussendlichen Schmiedestück gemäß Figur 5 erfolgte unter Durchführung des Verfahrens zur automatischen Stichplanberechnung und hat ein Schmiedestück 1 erbracht, welche ein optimiertes Gefüge und eine optimierte Formänderungsverteilung für den gewünschten Einsatzzweck bereitstellt.

## Patentansprüche

1. Verfahren zur automatischen Stichplanberechnung beim Radialschmieden von Langprodukten aus metallischen Werkstücken, insbesondere aus Stahl, in einer Radialschmiedemaschine mit wenigstens vier über den Umfang des Werkstücks angeordneten Schmiedewerkzeugen, die eingerichtet und angepasst sind, gleichzeitig die Schmiedeoperation zumindest über eine Teillänge des Werkstücks und/oder Langprodukts auszuführen, wobei Startparameter für den Radialschmiedevorgang in ein Stichplanberechnungsprogramm eingegeben und Zielparameter für den Radialschmiedevorgang festgelegt werden und das Stichplanberechnungsprogramm auf Grundlage dieser Start- und Zielparameter einen Stichplan oder eine Schmiedeabfolge berechnet, wobei das Stichplanberechnungsprogramm die Temperaturentwicklung sowie die Temperaturverteilung über den Querschnitt des Langprodukts sowie die Formänderung beim Radialschmieden berücksichtigt.

2. Verfahren gemäß Anspruch 1, **dadurch gekennzeichnet, dass** das Stichplanberechnungsprogramm eine optimierte Formänderungsverteilung, vorzugsweise innerhalb eines vorab festgelegten Temperaturbereichs, im Werkstück berücksichtigt.

3. Verfahren nach Anspruch 2, **dadurch gekennzeichnet, dass** das Stichplanberechnungsprogramm die optimierte Formänderungsverteilung und die Temperaturentwicklung sowie die Temperaturverteilung nach jedem Stich berücksichtigt.

4. Verfahren gemäß einem der voranstehenden Ansprüche, **dadurch gekennzeichnet, dass** die Startparameter zumindest die Ausgangsgeometrie des Werkstücks, dessen Abmessungen, Starttemperatur und Werkstoff umfassen.

5. Verfahren gemäß einem der voranstehenden Ansprüche, **dadurch gekennzeichnet, dass** die Zielparameter zumindest die Zielgeometrie des Langprodukts, dessen finale Abmessungen und Formänderungsverteilung, über den Querschnitt des Langprodukts, und/oder die Temperaturverteilung über den Querschnitt des Langprodukts, umfassen.

6. Verfahren gemäß Anspruch 5, **dadurch gekennzeichnet, dass** anhand der Zielparameter Temperaturentwicklung und Temperaturverteilung eine optimierte Formänderungsverteilung, insbesondere über die einzelnen Schritte des Schmiedeprozesses, durch das Stichplanberechnungsprogramm berechnet wird, oder dass anhand des Zielparameters einer optimierten Formänderungsverteilung die Temperaturentwicklung und Temperaturverteilung, insbesondere über die einzelnen Schritte des Schmiedeprozesses, berechnet werden.

7. Verfahren gemäß einem der voranstehenden Ansprüche, **dadurch gekennzeichnet, dass** anhand der Zielparameter Temperaturentwicklung und Temperaturverteilung ein optimiertes Gefüge oder eine optimierte Gefügeverteilung durch das Stichplanberechnungsprogramm berechnet wird.

8. Verfahren gemäß einem der voranstehenden Ansprüche 1 bis 6, **dadurch gekennzeichnet, dass** anhand des Gefüges als Zielparameter die Temperaturentwicklung und Temperaturverteilung berechnet werden.

9. Verfahren gemäß einem der voranstehenden Ansprüche, **dadurch gekennzeichnet, dass** das Stichplanberechnungsprogramm durch Umformarbeit währen des Radialschmiedens in das Werkstück eingebrachte Umformwärme berücksichtigt.

10. Verfahren gemäß einem der voranstehenden Ansprüche, **dadurch gekennzeichnet, dass** das Verfahren online mit einer Pressensteuerungseinheit verbunden ist und während des Radialschmiedevorgangs anhand von Messwerten und/oder berechneten Werten optimierte Steuerungsbefehle ausgeben kann.

11. Steuerungs- und/oder Regelungseinheit einer Radialschmiedemaschine, mit einem Stichplanberechnungsprogramm zur Ausführung des Verfahrens gemäß einem der Ansprüche 1 bis 10.

12. Radialschmiedemaschine zum Radialschmieden von Langprodukten aus metallischen Werkstücken, insbesondere aus Stahl, mit wenigstens vier über den Umfang des Werkstücks angeordneten Schmiedewerkzeugen, die eingerichtet und angepasst sind, gleichzeitig die Schmiedeoperation zumindest über eine Teillänge des Werkstücks und/oder Langprodukts auszuführen, und mit einer Steuerungs- und/oder Regelungseinheit gemäß Anspruch 11.

13. Radialschmiedemaschine gemäß Anspruch 12, **dadurch gekennzeichnet, dass** sie zum Radialschmieden von abgesetzten Wellen wie Eisenbahnachsen angepasst und ausgelegt ist.
